# EUROPEAN PATENT APPLICATION

(11) **EP 4 513 806 A1**
(43) Date of publication of application: **26.02.2025**
(21) Application number: 22937968.0
(22) Date of filing: 22.04.2022
(51) Int. Cl.: H04L 5/00, H04W 72/04, H04L 1/16

(54) **COMMUNICATION METHOD AND APPARATUS, AND ELECTRONIC DEVICE AND STORAGE MEDIUM**

(71) Applicant: Beijing Xiaomi Mobile Software Co., Ltd., Beijing 100085 (CN)
(72) Inventor: DONG, Xiandong, Beijing 100085 (CN)
(74) Representative: Dehns Germany Partnerschaft mbB
(86) International application number: PCT/CN2022/088599
(87) International publication number: WO 2023/201732

(57) **Abstract**

The embodiments of the present disclosure relate to the technical field of mobile communications. Provided are a communication method and apparatus, and an electronic device and a storage medium. The communication method is applied to a sensing initiator. The method comprises: determining a target radio frame, wherein the target radio frame comprises a multi user-physical layer protocol data unit (MU-PPDU), which comprises sensing measurement setup termination message frames corresponding to at least two sensing responders; and sending the target radio frame to the at least two sensing responders at the same time. The embodiments of the present disclosure solve the problem of a large number of termination message frames occupying more network resources in a WLAN sensing termination process.

## Description

### TECHNICAL FIELD

Embodiments of the present disclosure relate to the field of mobile communication technology, and specifically, to a communication method and device, an electronic device, and a storage medium.

### BACKGROUND

With the rapid development of mobile communication technology, the wireless fidelity (Wi-Fi) technology has made great progress in terms of transmission rate, throughput and the like. Currently, the Wi-Fi technology has studied for example 320Mhz bandwidth transmission, and aggregation and collaboration of multiple frequency bands, which is mainly applied in the scenarios of for example video transmission, augmented reality (AR) and virtual reality (VR).

The currently studied Wi-Fi technology may support the wireless local area network (WLAN) sensing technology, which may be applied in the scenarios of for example location discovery, proximity detection and presence detection in a dense environment such as home and corporate environments. In the WLAN sensing termination process, one or more sensing measurement setup processes may be terminated, and a sensing initiator and a sensing responder may communicate a termination message frame for the termination. However, a large number of termination message frames may occupy a large amount of network resources, which will reduce the spectral efficiency.

### SUMMARY

Embodiments of the present disclosure provide a communication method and device, an electronic device, and a storage medium, in order to solve the problem of a large number of termination message frames occupying a large amount of network resources in the WLAN sensing termination process.

In an aspect, an embodiment of the present disclosure provides a communication method applied to a sensing initiator, including:
determining a target radio frame, the target radio frame including a multi-user physical layer protocol data unit (MU-PPDU), and the MU-PPDU including sensing measurement setup termination message frames corresponding to at least two sensing responders; and
sending the target radio frame to the at least two sensing responders simultaneously.

In another aspect, an embodiment of the present disclosure further provides a communication method applied to a first sensing responder, including:
receiving a target radio frame, the target radio frame including a multi-user physical layer protocol data unit (MU-PPDU), and the MU-PPDU including sensing measurement setup termination message frames corresponding to at least two sensing responders; and
obtaining, in the MU-PPDU, a first sensing measurement setup termination frame corresponding to the first sensing responder.

In another aspect, an embodiment of the present disclosure further provides an electronic device, the network device is a sensing initiator, and includes:
a determining module, configured to determine a target radio frame, the target radio frame including a multi-user physical layer protocol data unit (MU-PPDU), and the MU-PPDU including sensing measurement setup termination message frames corresponding to at least two sensing responders; and
a sending module, configured to send the target radio frame to the at least two sensing responders simultaneously.

In another aspect, an embodiment of the present disclosure further provides an electronic device, which is a first sensing responder, including:
a receiving module, configured to receive a target radio frame, the target radio frame including a multi-user physical layer protocol data unit (MU-PPDU), and the MU-PPDU including sensing measurement setup termination message frames corresponding to at least two sensing responders; and
an obtaining module, configured to obtain, in the MU-PPDU, a first sensing measurement setup termination frame corresponding to the first sensing responder.

In another aspect, an embodiment of the present disclosure further provides a communication device applied to a sensing initiator, including:
a radio frame determining module, configured to determine a target radio frame, the target radio frame including a multi-user physical layer protocol data unit (MU-PPDU), and the MU-PPDU including sensing measurement setup termination message frames corresponding to at least two sensing responders; and
a radio frame sending module, configured to send the target radio frame to the at least two sensing responders simultaneously.

In another aspect, an embodiment of the present disclosure further provides a communication device applied to a first sensing responder, including:
a radio frame receiving module, configured to receive a target radio frame, the target radio frame including a multi-user physical layer protocol data unit (MU-PPDU), and the MU-PPDU including sensing measurement setup termination message frames corresponding to at least two sensing responders; and
a termination frame obtaining module, configured to obtain, in the MU-PPDU, a first sensing measurement setup termination frame corresponding to the first sensing responder.

An embodiment of the present disclosure further provides an electronic device, including a memory, a processor and a computer program stored in the memory and runnable on the processor, and the computer program, when being executed by the processor, implements the method according to one or more embodiments of the present disclosure.

An embodiment of the present disclosure further provides a computer-readable storage medium having a computer program stored thereon, and the computer program, when being executed by a processor, implements the method according to one or more embodiments of the present disclosure.

In the embodiments of the present disclosure, a sensing initiator determines a target radio frame, and sends the target radio frame to at least two sensing responders simultaneously. The target radio frame includes a MU-PPDU, and the MU-PPDU includes sensing measurement setup termination message frames corresponding to the at least two sensing responders. Therefore, the transmission times of the sensing measurement setup termination message frame may be reduced, and thus the occupation of the spectrum resource may be reduced and the spectral efficiency may be improved.

Additional aspects and advantages of embodiments of the present disclosure will be given, in part, in the following description, and these will become apparent from the following description or learned through the practice of the present disclosure.

### BRIEF DESCRIPTION OF THE DRAWINGS

In order to more clearly illustrate the technical solutions in the embodiments of the present disclosure, the accompanying drawings to be used in the description of the embodiments will be briefly described below. Obviously, the accompanying drawings in the following description are only some of the embodiments of the present disclosure, and a person skilled in the art may obtain other accompanying drawings on the basis of these drawings without creative labor.
FIG. 1 illustrates a flowchart of a communication method provided by an embodiment of the present disclosure;
FIG. 2 illustrates a schematic diagram of a first example of an embodiment of the present disclosure;
FIG. 3 illustrates another schematic diagram of the first example of an embodiment of the present disclosure;
FIG. 4 illustrates yet another schematic diagram of the first example of an embodiment of the present disclosure;
FIG. 5 illustrates another flowchart of a communication method provided by an embodiment of the present disclosure;
FIG. 6 illustrates another flowchart of a communication method provided by an embodiment of the present disclosure;
FIG. 7 illustrates another flowchart of a communication method provided by an embodiment of the present disclosure;
FIG. 8 illustrates another flowchart of a communication method provided by an embodiment of the present disclosure;
FIG. 9 illustrates a schematic structure diagram of a network device provided by an embodiment of the present disclosure;
FIG. 10 illustrates a schematic structure diagram of an electronic device provided by an embodiment of the present disclosure; and
FIG. 11 illustrates another schematic structure diagram of an electronic device provided by an embodiment of the present disclosure.

### DETAILED DESCRIPTION

The term 'and/or' in embodiments of the present disclosure describes an association relationship of associated objects, indicating that there may be three relationships, for example, A and/or B may indicate: A alone, both A and B, and B alone. The character '/' generally indicates an 'or' relationship of the associated objects before and after the '/'.

The term 'a plurality of' in embodiments of the present disclosure refers to two or more, and other quantifiers have a similar meaning.

Exemplary embodiments will be described in detail herein, examples of which are shown in the accompanying drawings. When the following description relates to the accompanying drawings, the same reference numeral in different drawings indicates the same or similar elements unless otherwise indicated. The implementations described in the following exemplary embodiments do not represent all implementations consistent with the present disclosure. Rather, they are only examples of devices and methods consistent with some aspects of the present disclosure as detailed in the appended claims.

The term used in the present disclosure is only for describing particular embodiments and is not intended to limit the present disclosure. The singular forms of 'a', 'said', and 'the' used in the present disclosure and the appended claims are also intended to encompass the plural forms unless otherwise indicated clearly. It is to be understood that the term 'and/or' as used herein refers to and include any or all possible combinations of one or more of the associated listed items.

It is to be understood that while the terms such as first, second, third may be used in the present disclosure to describe various pieces of information, such information should not be limited by these terms. These terms are used only to distinguish the same type of information from one another. For example, without departing from the scope of the present disclosure, first information may also be referred to as second information, and similarly, second information may be referred to as first information. Depending on the context, for example, the term 'if' as used herein may be interpreted as 'at the time ......' or 'when ......' or "in response to determining".

The technical solutions in the embodiments of the present disclosure will be described clearly and completely in the following in conjunction with the accompanying drawings in the embodiments of the present disclosure, and it is clear that the described embodiments are only a part but not all of the embodiments of the present disclosure. Based on the embodiments in the present disclosure, all other embodiments obtained by a person skilled in the art without creative labor fall within the protection scope of the present disclosure.

Embodiments of the present disclosure provide a communication method and device, an electronic device, and a storage medium, in order to solve a problem in which a large number of termination message frames may occupy a large amount of network resources.

The method and the device are based on the same concept, and since the method and the device solve the problem with a similar principle, the implementations of the device and the method may be referred to each other, which will not be repeated.

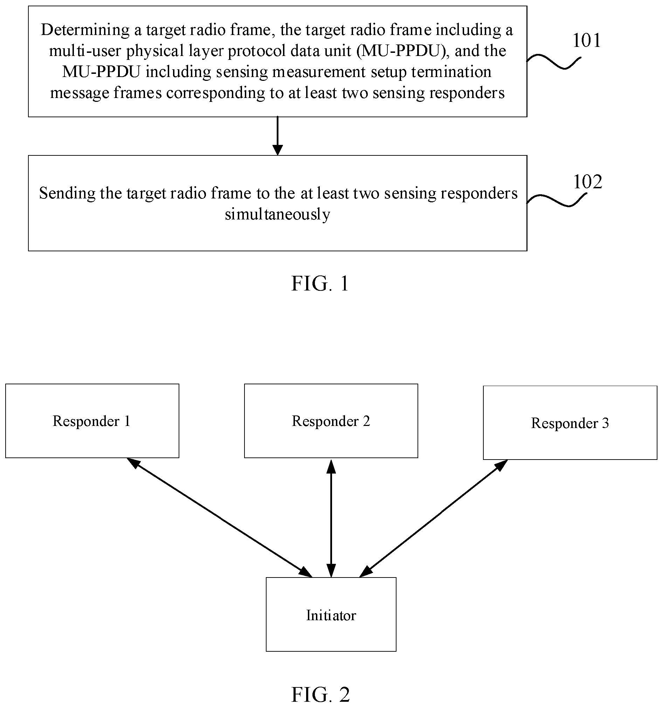

As shown in FIG. 1, an embodiment of the present disclosure provides a communication method, optionally, the method may be applied to a network device, and the network device is used as a sensing initiator in a sensing measurement process, for example, an access point device AP. The method may include the following steps.

In step 101, a target radio frame is determined. The target radio frame includes a multi-user physical layer protocol data unit (MU-PPDU), and the MU-PPDU includes sensing measurement setup termination message frames corresponding to at least two sensing responders.

As a first example, referring to FIGS. 2 to 4, a WLAN sensing process and a WLAN sensing architecture applied by the communication method according to an embodiment of the present disclosure are described firstly.

FIG. 2 illustrates a schematic architecture diagram of a WLAN sensing (process), in which a sensing initiator (or initiator) initiates WLAN sensing (e.g., initiates a WLAN sensing session), and there may be a plurality of sensing responders (or sensing receivers) or responders responding thereto, for example, responder 1, responder 2, and responder 3 as shown in FIG. 2. When a sensing initiator initiates WLAN sensing, a plurality of associated or unassociated WLAN sensing responders may respond.

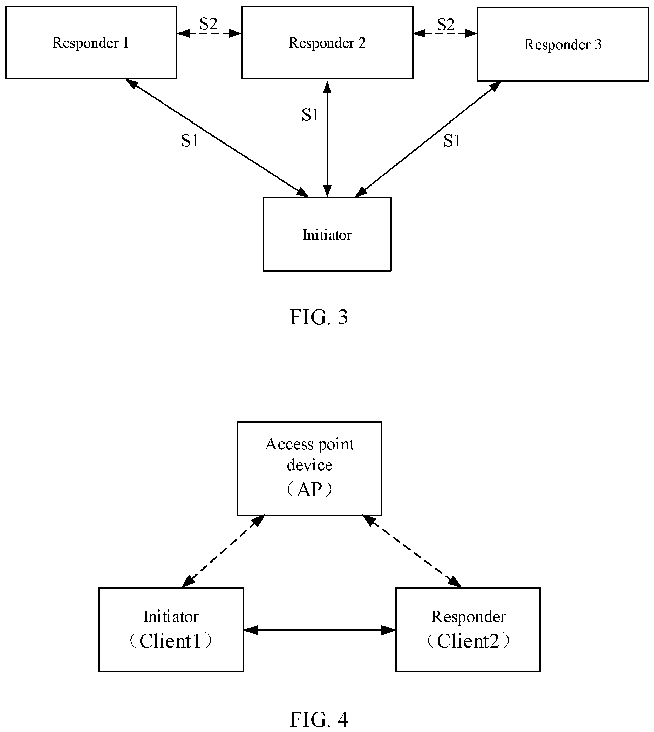

Referring to FIG. 3, a sensing initiator and a sensing responder communicate with each other via a communication connection, as shown by a communication connection S1, and the sensing responders communicate with each other via a communication connection S2.

Each sensing initiator may be a client, and each sensing responder (in this example, i.e., the sensing responder 1 to the sensing responder 3) may be a station device (STA) or an access point device (AP). Furthermore, the STA and the AP may play a plurality of roles in the WLAN sensing process. For example, in the WLAN sensing process, the STA may also act as a sensing initiator, which may be a sensing transmitter, a sensing receiver, or both, or neither. In the WLAN sensing process, the sensing responder may also be a sensing transmitter, a sensing receiver, or both.

As another architecture, as shown in FIG. 4, both of the sensing initiator and the sensing responder may also be clients, and they may communicate with each other by connecting to the same access point device (AP). As shown in FIG. 4, client 1 is the sensing initiator, and client 2 is the sensing responder.

Typically, the WLAN sensing process includes the setup of a WLAN sensing session, the setup of a WLAN sensing measurement, and the termination of a WLAN sensing measurement, or the like. The WLAN sensing process usually includes a trigger based sensing (TB) manner and a Non-TB based sensing manner. Specifically, the TB-based manner means that the AP is an initiator or a transmitter, and the Non-TB based manner means that the STA is an initiator or a transmitter. In the TB-based scenario, the AP, as the sensing initiator, may initiate the termination of one or more sensing measurement settings by sending a sensing measurement setup termination message frame to the STA as the sensing responder. However, a large number of sensing measurement setup termination message frames may occupy a large amount of network resources. Moreover, usually, after the AP sends the sensing measurement setup termination message frame, the STA may reply with an acknowledgement message (e.g., an ACK frame), which further occupies the network resource and affects the effective utilization of the spectrum. In an embodiment of the present disclosure, the AP determines a target radio frame, the target radio frame includes a multi-user physical layer protocol data unit (MU-PPDU), the MU-PPDU includes sensing measurement setup termination message frames corresponding to at least two sensing responders, that is, the MU-PPDU includes sensing measurement setup termination message frames respectively corresponding to a plurality of STAs, the MU-PPDU includes multi-user (STA) oriented PPDUs, and the PPDU of each user (STA) includes the sensing measurement setup termination message frame corresponding to the STA.

The sensing measurement setup termination frame is a unicast message frame.

Optionally, the MU-PPDU may be in the form of downlink orthogonal frequency division multiple access (DL OFDMA), downlink multi-user multi-input multi-output (DL MU-MIMO), or a combination thereof.

Optionally, the PPDU includes a physical layer header preamble (PLCP header preamble) and a MAC protocol data unit (MPDU), or includes a PLCP header preamble and an aggregation of the MPDUs (A-MPDU).

In step 102, the target radio frame is sent to the at least two sensing responders simultaneously.

After the target radio frame is determined, the target radio frame is sent simultaneously to a plurality of sensing responders. Therefore, with a single sending operation, each of the plurality of responders may receive a sensing measurement setup termination message frame corresponding thereto, thereby reducing the sending operation of the sensing measurement setup termination message frame and the occupation of the spectrum resource.

For a responder that does not support the MU format, since it also initiates a 1v1 sensing measurement in the sensing measurement process, the AP may initiate a separate sensing measurement setup termination process.

In the embodiments of the present disclosure, a sensing initiator determines a target radio frame, and sends the target radio frame to at least two sensing responders simultaneously. The target radio frame includes a MU-PPDU, and the MU-PPDU includes sensing measurement setup termination message frames corresponding to the at least two sensing responders. Therefore, the transmission times of the sensing measurement setup termination message frame may be reduced, and thus the occupation of the spectrum resource may be reduced and the spectral efficiency may be improved. The embodiments of the present disclosure solve the problem in which a large number of termination message frames occupy a large amount of network resources in the WLAN sensing termination process.

In an optional embodiment, the MU-PPDU further includes trigger frames corresponding to the sensing measurement setup termination frames respectively.

The trigger frame indicates an uplink resource unit configured for the sensing responder, and the uplink resource unit carries an acknowledgement message of the sensing measurement setup termination frame replied by the sensing responder.

The trigger frame is used to indicate the uplink resource unit (RU) configured for the sensing responder, and the RU is used to carry the acknowledgement message (e.g. an uplink ACK frame) of the sensing measurement setup termination frame replied by the sensing responder, for example, the RU is 26-tone (subcarrier), 52-tone, or the MRU is 106+52, 52+ 26-tone, or the like.

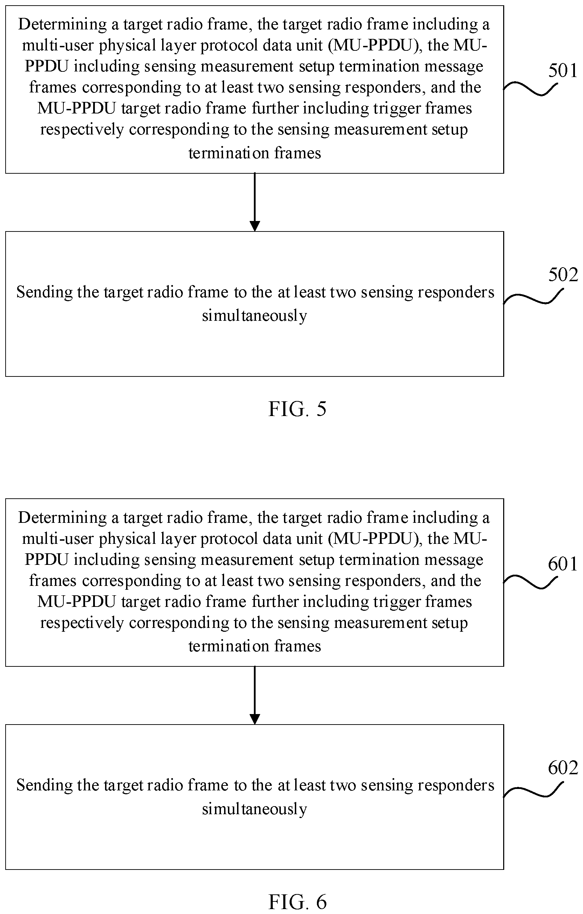

As shown in FIG. 5, an embodiment of the present disclosure provides a communication method, optionally, the method may be applied to a network device, and the network device is used as a sensing initiator in a sensing measurement process, for example, an access point device AP. The method may include the following steps.

In step 501, a target radio frame is determined. The target radio frame includes a multi-user physical layer protocol data unit (MU-PPDU), and the MU-PPDU includes sensing measurement setup termination message frames corresponding to at least two sensing responders. The MU-PPDU target radio frame further includes trigger frames corresponding to the sensing measurement setup termination frames respectively.

The trigger frame indicates an uplink resource unit configured for the sensing responder, and the uplink resource unit carries an acknowledgement message of the sensing measurement setup termination frame replied by the sensing responder.

The MU-PPDU includes an aggregation of first MAC protocol data units (MPDUs), and the aggregation of first MPDUs includes an aggregation of the sensing measurement setup termination frames and an aggregation of the trigger frames.

The WLAN sensing process and the WLAN sensing architecture applied by the communication method according to an embodiment of the present disclosure may refer to the above first example, which will not be repeated herein.

In an embodiment of the present disclosure, the AP determines a target radio frame, the target radio frame includes a MU-PPDU, the MU-PPDU includes multi-user (STA) oriented PPDUs, and the PPDU of each user (STA) includes the sensing measurement setup termination message frame and the trigger frame of the STA.

Specifically, the MU-PPDU includes an aggregation of first MAC protocol data units (MPDUs), for example, in the DL OFDMA form or the DL MU-MIMO form, the AP sends the aggregation of first MPDUs (which will be denoted as A-MPDU in the following) in the form of MU-PPDU, and the A-MPDU includes the aggregation of the sensing measurement setup termination frames and the aggregation of the trigger frames.

In the A-MPDU, the sensing measurement setup termination frame and the trigger frame both are unicast message frames, and the AP aggregates them respectively to form the A-MPDU for transmission, for example, a plurality of sensing measurement setup termination frames are aggregated, and a plurality of trigger frames are aggregated, thereby forming the A-MPDU.

In step 502, the target radio frame is sent to the at least two sensing responders simultaneously.

After the target radio frame is determined, the target radio frame is sent simultaneously to a plurality of sensing responders. Therefore, with a single sending operation, each of the plurality of responders may receive a sensing measurement setup termination message frame corresponding thereto, thereby reducing the sending operation of the sensing measurement setup termination message frame and the occupation of the spectrum resource.

As shown in FIG. 6, an embodiment of the present disclosure provides a communication method, optionally, the method may be applied to a network device, and the network device is used as a sensing initiator in a sensing measurement process, for example, an access point device AP. The method may include the following steps.

In step 601, a target radio frame is determined. The target radio frame includes a multi-user physical layer protocol data unit (MU-PPDU), and the MU-PPDU includes sensing measurement setup termination message frames corresponding to at least two sensing responders. The MU-PPDU target radio frame further includes trigger frames corresponding to the sensing measurement setup termination frames respectively.

The trigger frame indicates an uplink resource unit configured for the sensing responder, and the uplink resource unit carries an acknowledgement message of the sensing measurement setup termination frame replied by the sensing responder.

The MU-PPDU includes a second MPDU, and the second MPDU includes the sensing measurement setup termination frames and the trigger frames respectively corresponding to the sensing measurement setup termination frames.

The WLAN sensing process and the WLAN sensing architecture applied by the communication method according to an embodiment of the present disclosure may refer to the above first example, which will not be repeated herein.

In an embodiment of the present disclosure, the AP determines a target radio frame, the target radio frame includes a MU-PPDU, the MU-PPDU includes multi-user (STA) oriented PPDUs, and the PPDU of each user (STA) includes the sensing measurement setup termination message frame and the trigger frame of the STA.

Specifically, the MU-PPDU includes a second MPDU, and the second MPDU includes the sensing measurement setup termination frames and the trigger frames respectively corresponding to the sensing measurement setup termination frames. That is, in the second MPDU, the sensing measurement setup termination frame of each STA is set to be in one-to-one correspondence with the trigger frame of that STA. For example, after a short inter frame space (SIFS) following the transmission of the sensing measurement setup termination message frame, the AP sends the trigger frame of that STA.

In step 602, the target radio frame is sent to the at least two sensing responders simultaneously.

After the target radio frame is determined, the target radio frame is sent simultaneously to a plurality of sensing responders. Therefore, with a single sending operation, each of the plurality of responders may receive a sensing measurement setup termination message frame corresponding thereto, thereby reducing the sending operation of the sensing measurement setup termination message frame and the occupation of the spectrum resource.

In the embodiment of the present disclosure, a sensing initiator determines a target radio frame, and sends the target radio frame to at least two sensing responders simultaneously. The target radio frame includes a MU-PPDU, and the MU-PPDU includes sensing measurement setup termination message frames corresponding to the at least two sensing responders. Therefore, the transmission times of the sensing measurement setup termination message frame may be reduced, and thus the occupation of the spectrum resource may be reduced and the spectral efficiency may be improved.

In the above embodiment, the AP initiates the sensing measurement setup termination frame for transmission in a multi-user form, in which the following manners are adapted, i.e., the aggregation of first MPDUs includes the aggregation of the sensing measurement setup termination frames and the aggregation of the trigger frames, or the second MPDU includes the sensing measurement setup termination frames and the trigger frames respectively corresponding to the sensing measurement setup termination frames. In the above two manners, as the lengths of the unicast sensing measurement termination message frames sent by the AP are different (including a case where the number of measurement setup IDs are not the same), padding may be added to some short frames.

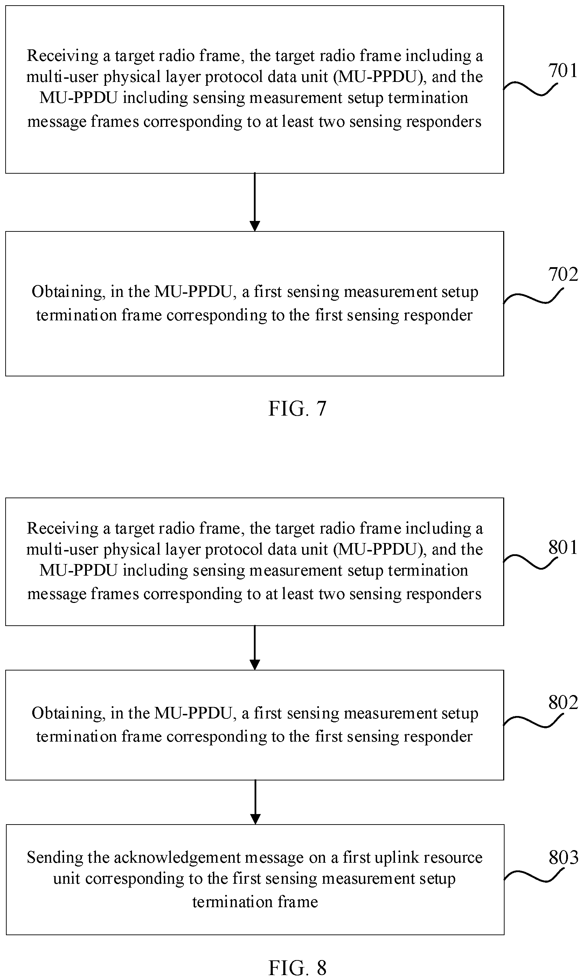

As shown in FIG. 7, an embodiment of the present disclosure provides a communication method, optionally, the method may be applied to an electronic device, the electronic device may be a station device STA, and the station device STA is a first sensing responder (hereinafter denoted as STA 1). The method includes the flowing steps.

In step 701, a target radio frame is received. The target radio frame includes a multi-user physical layer protocol data unit (MU-PPDU), and the MU-PPDU includes sensing measurement setup termination message frames corresponding to at least two sensing responders.

The WLAN sensing process and the WLAN sensing architecture applied by the communication method according to an embodiment of the present disclosure may refer to the above first example, which will not be repeated herein.

Typically, the WLAN sensing process includes the setup of a WLAN sensing session, the setup of a WLAN sensing measurement, and the termination of a WLAN sensing measurement, or the like. The WLAN sensing process usually includes a TB-based manner and a Non-TB based sensing manner. Specifically, the TB-based manner means that the AP is an initiator or a transmitter, and the Non-TB based manner means that the STA is an initiator or a transmitter. In the TB-based scenario, the AP, as the sensing initiator, may initiate the termination of one or more sensing measurement settings by sending a sensing measurement setup termination message frame to the STA as the sensing responder. However, a large number of sensing measurement setup termination message frames may occupy a large amount of network resources. Moreover, usually, after the AP sends the sensing measurement setup termination message frame, the STA may reply with an acknowledgement message (e.g., an ACK frame), which further occupies the network resource and affects the effective utilization of the spectrum. In an embodiment of the present disclosure, the first sensing responder receives a target radio frame, the target radio frame includes a MU-PPDU, the MU-PPDU includes sensing measurement setup termination message frames corresponding to at least two sensing responders, that is, the MU-PPDU includes sensing measurement setup termination message frames respectively corresponding to a plurality of STAs, the MU-PPDU includes multi-user (STA) oriented PPDUs, and the PPDU of each user (STA) includes the sensing measurement setup termination message frame corresponding to the STA.

The sensing measurement setup termination frame is a unicast message frame.

Optionally, the MU-PPDU may be in the form of downlink orthogonal frequency division multiple access (DL OFDMA), downlink multi-user multi-input multi-output (DL MU-MIMO), or a combination thereof.

Optionally, the PPDU includes a physical layer header preamble (PLCP header preamble) and a MAC protocol data unit (MPDU), or includes a PLCP header preamble and an aggregation of the MPDUs (A-MPDU).

In step 702, a first sensing measurement setup termination frame corresponding to the first sensing responder is obtained in the MU-PPDU.

After receiving the target radio frame, the STA 1 obtains the first sensing measurement setup termination frame corresponding to the first sensing responder, and terminates the sensing measurement process according to the first sensing measurement setup termination frame. Therefore, with a single sending operation of the sensing initiator, each of the plurality of sensing responders may receive a sensing measurement setup termination message frame corresponding thereto, thereby reducing the sending operation of the sensing measurement setup termination message frame and the occupation of the spectrum resource.

In the embodiments of the present disclosure, a first sensing responder receives a target radio frame, and obtains a first sensing measurement setup termination frame corresponding to the first sensing responder in the MU-PPDU. The target radio frame includes a MU-PPDU, and the MU-PPDU includes sensing measurement setup termination message frames corresponding to the at least two sensing responders. Therefore, the transmission times of the sensing measurement setup termination message frame may be reduced, and thus the occupation of the spectrum resource may be reduced, and the utilization of frequency resources may be improved.

As shown in FIG. 8, an embodiment of the present disclosure provides a communication method, optionally, the method may be applied to an electronic device, the electronic device may be a station device STA, and the station device STA is a first sensing responder. The method includes the flowing steps.

In step 801, a target radio frame is received. The target radio frame includes a multi-user physical layer protocol data unit (MU-PPDU), and the MU-PPDU includes sensing measurement setup termination message frames corresponding to at least two sensing responders.

The MU-PPDU further includes trigger frames respectively corresponding to the sensing measurement setup termination frames.

The trigger frame indicates an uplink resource unit configured for the sensing responder, and the uplink resource unit carries an acknowledgement message of the sensing measurement setup termination frame replied by the sensing responder.

The trigger frame is used to indicate the uplink resource unit (RU) configured for the sensing responder, and the RU is used to carry the acknowledgement message (e.g. an uplink ACK frame) of the sensing measurement setup termination frame replied by the sensing responder.

In step 802, a first sensing measurement setup termination frame corresponding to the first sensing responder is obtained in the MU-PPDU.

In step 803, the acknowledgement message is sent on the first uplink resource unit corresponding to the first sensing measurement setup termination frame.

The STA 1 replies with the acknowledgement message on the first uplink resource unit to indicates the AP that it has received the first sensing measurement setup termination frame, and after replying the AP with the acknowledgement message, the STA 1 may terminate the sensing measurement process.

In an optional embodiment, the MU-PPDU includes an aggregation of first MAC protocol data units (MPDUs), and the aggregation of first MPDUs includes an aggregation of the sensing measurement setup termination frames and an aggregation of the trigger frames.

Specifically, the MU-PPDU includes an aggregation of first MAC protocol data units (MPDUs), for example, in the DL OFDMA form or the DL MU-MIMO form, the AP sends the aggregation of first MPDUs (which will be denoted as A-MPDU in the following) in the form of MU-PPDU, and the A-MPDU includes the aggregation of the sensing measurement setup termination frame sand the aggregation of the trigger frames.

In the A-MPDU, the sensing measurement setup termination frame and the trigger frame both are unicast message frames, and the AP aggregates them respectively to form the A-MPDU for transmission, for example, a plurality of sensing measurement setup termination frames are aggregated, and a plurality of trigger frames are aggregated, thereby forming the A-MPDU.

In an optional embodiment, the MU-PPDU includes a second MPDU, and the second MPDU includes the sensing measurement setup termination frames and the trigger frames respectively corresponding to the sensing measurement setup termination frames.

The MU-PPDU includes multi-user (STA) oriented PPDUs, and the PPDU of each user (STA) includes the sensing measurement setup termination message frame and the trigger frame of the STA.

Specifically, the MU-PPDU includes a second MPDU, and the second MPDU includes the sensing measurement setup termination frames and the trigger frames respectively corresponding to the sensing measurement setup termination frames. That is, in the second MPDU, the sensing measurement setup termination frame of each STA is set to be in one-to-one correspondence with the trigger frame of that STA. For example, after a short inter frame space (SIFS) following the transmission of the sensing measurement setup termination message frame, the AP sends the trigger frame of that STA.

In the above embodiment, the AP initiates the sensing measurement setup termination frame for transmission in a multi-user form, in which the following manners are adapted, i.e., the aggregation of first MPDUs includes the aggregation of the sensing measurement setup termination frames and the aggregation of the trigger frames, or the second MPDU includes the sensing measurement setup termination frames and the trigger frames respectively corresponding to the sensing measurement setup termination frames. In the above two manners, as the lengths of the unicast sensing measurement termination message frames sent by the AP are different (including a case where the number of measurement setup IDs are not the same), padding may be added to some short frames.

In the embodiments of the present disclosure, a first sensing responder receives a target radio frame, and obtains a first sensing measurement setup termination frame corresponding to the first sensing responder in the MU-PPDU. The target radio frame includes a MU-PPDU, and the MU-PPDU includes sensing measurement setup termination message frames corresponding to the at least two sensing responders. Therefore, the transmission times of the sensing measurement setup termination message frame may be reduced, and thus the occupation of the spectrum resource may be reduced, and the utilization of frequency resources may be improved.

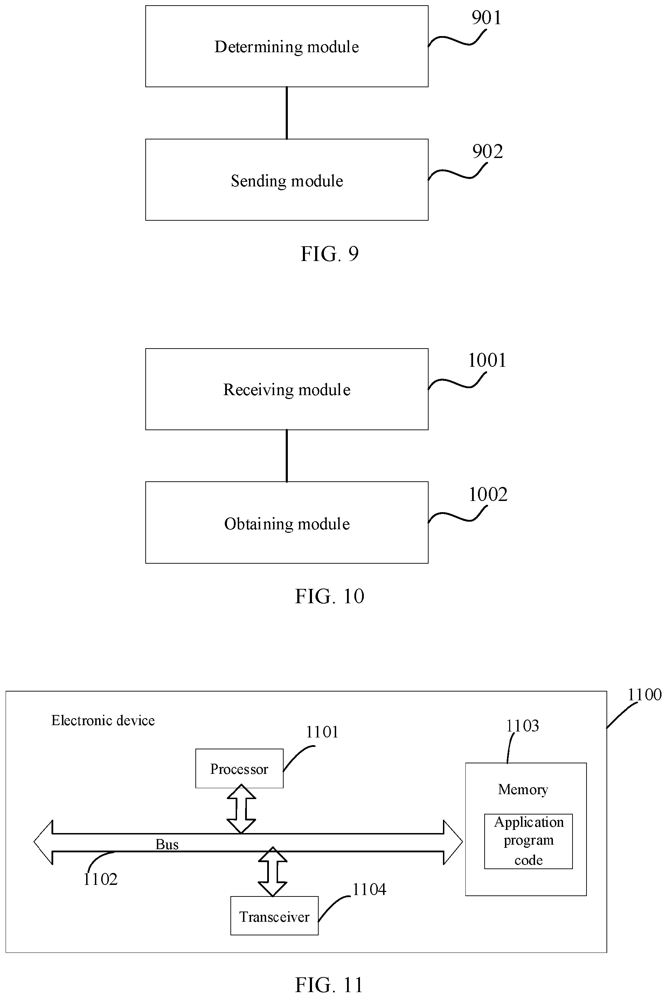

As shown in FIG. 9, based on the same principle as the method provided by the embodiments of the present disclosure, an embodiment of the present disclosure further provides a network device, the network device is a sensing initiator such as an access point device AP, and the network device includes:
a determining module 901, configured to determine a target radio frame, the target radio frame including a multi-user physical layer protocol data unit (MU-PPDU), and the MU-PPDU including sensing measurement setup termination message frames corresponding to at least two sensing responders; and
a sending module 902, configured to send the target radio frame to the at least two sensing responders simultaneously.

Optionally, in an embodiment of the present disclosure, the MU-PPDU further includes trigger frames respectively corresponding to the sensing measurement setup termination frames.

The trigger frame indicates an uplink resource unit configured for the sensing responder, and the uplink resource unit carries an acknowledgement message of the sensing measurement setup termination frame replied by the sensing responder.

Optionally, in an embodiment of the present disclosure, the MU-PPDU includes an aggregation of first MAC protocol data units (MPDUs).

The aggregation of first MPDUs includes an aggregation of the sensing measurement setup termination frames and an aggregation of the trigger frames.

Optionally, in an embodiment of the present disclosure, the MU-PPDU includes a second MPDU.

The second MPDU includes the sensing measurement setup termination frames and the trigger frames respectively corresponding to the sensing measurement setup termination frames.

Optionally, in an embodiment of the present disclosure, the sensing measurement setup termination frame is a unicast message frame.

In the embodiment of the present disclosure, the determining module 901 determines a target radio frame, and the sending module 902 sends the target radio frame to at least two sensing responders simultaneously. The target radio frame includes a MU-PPDU, and the MU-PPDU includes sensing measurement setup termination message frames corresponding to the at least two sensing responders. Therefore, the transmission times of the sensing measurement setup termination message frame may be reduced, and thus the occupation of the spectrum resource may be reduced and the utilization of frequency resources may be improved.

An embodiment of the present disclosure also provides a communication device applied to a sensing initiator, and the device includes:
a radio frame determining module, configured to determine a target radio frame, the target radio frame including a multi-user physical layer protocol data unit (MU-PPDU), and the MU-PPDU including sensing measurement setup termination message frames corresponding to at least two sensing responders; and
a radio frame sending module, configured to send the target radio frame to the at least two sensing responders simultaneously.

The device further includes other corresponding modules of the network device in the above embodiment for performing other corresponding functions of the network device, which are not repeated herein.

As shown in FIG. 10, based on the same principle as the method provided by the embodiments of the present disclosure, an embodiment of the present disclosure further provides an electronic device, the electronic device may be a station device STA which is a first sensing responder, and the electronic device includes:
a receiving module 1001, configured to receive a target radio frame, the target radio frame including a multi-user physical layer protocol data unit (MU-PPDU), and the MU-PPDU including sensing measurement setup termination message frames corresponding to at least two sensing responders; and
an obtaining module 1002, configured to obtain, in the MU-PPDU, a first sensing measurement setup termination frame corresponding to the first sensing responder.

Optionally, in an embodiment of the present disclosure, the MU-PPDU further includes trigger frames respectively corresponding to the sensing measurement setup termination frames.

The trigger frame indicates an uplink resource unit configured for the sensing responder, and the uplink resource unit carries an acknowledgement message of the sensing measurement setup termination frame replied by the sensing responder.

The electronic device further includes:
a message sending module, configured to, after the obtaining module 1002 obtains, in the MU-PPDU, the first sensing measurement setup termination frame corresponding to the first sensing responder, send the acknowledgement message on a first uplink resource unit corresponding to the first sensing measurement setup termination frame; and after sending the acknowledgement message, terminate a sensing measurement process.

Optionally, in an embodiment of the present disclosure, the MU-PPDU includes an aggregation of first MAC protocol data units (MPDUs).

The aggregation of first MPDUs includes an aggregation of the sensing measurement setup termination frames and an aggregation of the trigger frames.

Optionally, in an embodiment of the present disclosure, the MU-PPDU includes a second MPDU.

The second MPDU includes the sensing measurement setup termination frames and the trigger frames respectively corresponding to the sensing measurement setup termination frames.

Optionally, in an embodiment of the present disclosure, the sensing measurement setup termination frame is a unicast message frame.

In the embodiment of the present disclosure, the receiving module 1001 receives a target radio frame, and the obtaining module 1002 obtains, in the MU-PPDU, a first sensing measurement setup termination frame corresponding to the first sensing responder. The target radio frame includes a MU-PPDU, and the MU-PPDU includes sensing measurement setup termination message frames corresponding to the at least two sensing responders. Therefore, the transmission times of the sensing measurement setup termination message frame may be reduced, and thus the occupation of the spectrum resource may be reduced and the utilization of frequency resources may be improved.

An embodiment of the present disclosure also provides a communication device applied to a first sensing responder, and the device includes:
a radio frame receiving module, configured to receive a target radio frame, the target radio frame including a multi-user physical layer protocol data unit (MU-PPDU), and the MU-PPDU including sensing measurement setup termination message frames corresponding to at least two sensing responders; and
a termination frame obtaining module, configured to obtain, in the MU-PPDU, a first sensing measurement setup termination frame corresponding to the first sensing responder.

The device further includes other corresponding modules of the electronic device in the above embodiment for performing other corresponding functions of the electronic device, which are not repeated herein.

In an optional embodiment, an embodiment of the present disclosure also provides an electronic device, as shown in FIG. 11. The electronic device 1100 shown in FIG. 11 may be a server including: a processor 1101 and a memory 1103. The processor 1101 and the memory 1103 are connected to each other, e.g., via a bus 1102. Optionally, the electronic device 1100 may also include a transceiver 1104. It is to be noted that the number of the transceiver 1104 is not limited to one in practice, and the structure of the electronic device 1100 does not constitute a limitation on the embodiments of the present disclosure.

The processor 1101 may be a CPU (Central Processing Unit), a general-purpose processor, a DSP (Digital Signal Processor), an ASIC (Application Specific Integrated Circuit), an FPGA (Field Programmable Gate Array) or other programmable logic device, transistor logic device, hardware component, or any combination thereof. It may implement or execute various exemplary logic blocks, modules, and circuits described in conjunction with the present disclosure. The processor 1101 may also be a combination that implements a computing function, for example, a combination including one or more microprocessors, a combination of a DSP and a microprocessor, or the like.

The bus 1102 may include a path for transferring information between the above-described components. The bus 1102 may be a PCI (Peripheral Component Interconnect) bus, an EISA (Extended Industry Standard Architecture) bus or the like. The bus 1102 may be divided into an address bus, a data bus, a control bus, or the like. For ease of representation, only one thick line is shown in FIG. 11, which however does not mean that there is only one bus or one type of bus.

The memory 1103 may be a ROM (Read Only Memory) or other type of static storage device that can store static information and instructions, a RAM (Random Access Memory) or other type of dynamic storage device that can store information and instructions, or an EEPROM (Electrically Erasable Programmable Read Only Memory), CD-ROM (Compact Disc Read Only Memory) or other optical storage, optical disc storage (including compressed discs, laser discs, compact discs, digital general purpose discs, Blu-ray discs, etc.), disk storage media or other magnetic storage devices, or any other media capable of being used to carry or store desired program code in the form of instructions or data structures and capable of being accessed by a computer, which is not limited thereto.

The memory 1103 is used to store application program code for executing the solution of the present disclosure and is controlled for execution by the processor 1101. The processor 1101 is used to execute the application program code stored in the memory 1103 to implement the method in the above embodiment.

The electronic device includes, but is not limited to: a mobile terminal such as a mobile phone, a laptop computer, a digital broadcast receiver, a PDA (personal digital assistant), a PAD, a PMP (portable multimedia player), an in-vehicle terminal (such as in-vehicle navigation terminal), or the like; and a fixed terminal such as a digital TV, a desktop computer, or the like. The electronic device shown in FIG. 11 is merely an example and should not impose any limitation on the functionality and application scope of the embodiments of the present disclosure.

The server provided in the present disclosure may be a standalone physical server, a server cluster or a distributed system formed by a plurality of physical servers, and a cloud server providing basic cloud computing services such as cloud services, cloud databases, cloud computation, cloud functions, cloud storage, network services, cloud communications, middleware services, domain name services, security services, CDNs, and big data and artificial intelligence platforms. The terminals may be smartphones, tablets, laptops, desktop computers, smart speakers, smart watches, and the like, but are not limited thereto. The terminal and the server may be connected directly or indirectly via wired or wireless communication, which is not limited in the present disclosure.

An embodiment of the present disclosure provides a computer-readable storage medium having a computer program stored thereon which, when runs on a computer, enables the computer to execute the method in the above embodiments.

It is to be understood that although the individual steps in the flowchart of the accompanying drawings are shown in sequence as indicated by the arrows, the steps are not necessarily executed sequentially in the order indicated by the arrows. Unless expressly stated herein, the execution of these steps is not strictly limited in order, and they may be executed in other orders. Moreover, at least a portion of the steps in the flowchart of the accompanying drawings may include a plurality of sub-steps or a plurality of phases, which are not necessarily executed or completed at the same moment but may be executed at different moments, and they may not be executed sequentially, but may be executed in turn or alternately with the other steps or at least a portion of sub-steps or phases of the other steps.

It is to be noted that the computer-readable medium described above in the present disclosure may be a computer-readable signal medium or a computer-readable storage medium or any combination thereof. The computer-readable storage medium may be but is not limited to for example a system, device, or element of electricity, magnetism, light, electromagnetism, infrared ray, or semiconductor, or any combination thereof. More specific examples of the computer-readable storage media may include, but are not limited to: an electrical connection having one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof. In the present disclosure, the computer-readable storage medium may be any tangible medium containing or storing a program that may be used by or in combination with an instruction-executing system, device, or element. And in the present disclosure, the computer-readable signal medium may include a data signal propagated in a baseband or as part of a carrier carrying computer-readable program code. Such propagated data signals may take a variety of forms, including, but not limited to, electromagnetic signals, optical signals, or any suitable combination thereof. The computer-readable signal medium may also be any computer-readable medium other than the computer-readable storage medium that may send, propagate, or transmit a program for use by or in conjunction with an instruction-executing system, device, or element. The program code contained on the computer-readable medium may be transmitted using any suitable medium, including, but not limited to: wire, optical cable, RF (Radio Frequency), or the like, or any suitable combination thereof.

The above computer-readable medium may be contained in the above electronic device; or may exist separately and not be assembled into the electronic device.

The above computer-readable medium carries one or more programs that, when being executed by the electronic device, cause the electronic device to perform the method in the above embodiments.

According to an aspect of the present disclosure, there is provided a computer program product or computer program including computer instructions which are stored in a computer-readable storage medium. A processor of a computer device reads the computer instructions from the computer-readable storage medium, and the processor executes the computer instructions such that the computer device performs the method provided in the various optional implementations described above.

The computer program code for performing the operations of the present disclosure may be written in one or more programming languages or combinations thereof, including object-oriented programming languages - such as Java, Smalltalk, C++ - and conventional procedural programming languages - such as the 'C' language or similar programming languages. The program code may be executed entirely on a user computer, executed partially on the user computer, executed as a stand-alone software package, executed partially on the user computer and partially on a remote computer, or executed entirely on a remote computer or server. In the case of the remote computer, the remote computer may be connected to the user computer via any kind of network, including a local area network (LAN) or a wide area network (WAN), or may be connected to an external computer (e.g., by using the Internet of an Internet service provider).

The flowcharts and block diagrams in the accompanying drawings illustrate the architecture, functionality, and operation that may be implemented by the systems, methods, and computer program products according to various embodiments of the present disclosure. In this regard, each block in the flowcharts or block diagrams may represent a module, program segment, or portion of code that contains one or more executable instructions for implementing a specified logical function. It is also to be noted that in some alternative implementations, the functions indicated in the blocks may also occur in a different order than that indicated in the accompanying drawings. For example, two consecutively represented blocks may actually be executed substantially in parallel, and they may sometimes be executed in a reverse order, depending on the function involved. It is also to be noted that each block in the block diagrams and/or flowcharts, and a combination of the blocks in the block diagrams and/or flowcharts, may be implemented with a dedicated hardware-based system that performs a specified function or operation, or may be implemented with a combination of dedicated hardware and computer instructions.

The modules involved in the description of the embodiments of the present disclosure may be implemented by way of software or may be implemented by way of hardware. The name of a module does not constitute a limitation on the module in some cases, for example, a module A may also be described as "a module A for performing an operation B".

The above description is only a preferred embodiment of the present disclosure and an illustration of the technical principle applied. A person skilled in the art should understand that the scope of the present disclosure is not limited to a technical solution formed by a particular combination of the above-described technical features, but also covers other technical solutions formed by any combination of the above-described technical features or their equivalents without departing from the above-described concept of the present disclosure, for example, a technical solution formed by replacing the above features with technical features (which however not limited thereto) having similar functions disclosed in the present disclosure.

## Claims

1. A communication method applied to a sensing initiator, comprising:
determining a target radio frame, the target radio frame comprising a multi-user physical layer protocol data unit, MU-PPDU, and the MU-PPDU comprising sensing measurement setup termination message frames corresponding to at least two sensing responders; and
sending the target radio frame to the at least two sensing responders simultaneously.

2. The communication method according to claim 1, wherein the MU-PPDU further comprises trigger frames respectively corresponding to the sensing measurement setup termination frames, and
the trigger frame indicates an uplink resource unit configured for the sensing responder, and the uplink resource unit carries an acknowledgement message of the sensing measurement setup termination frame replied by the sensing responder.

3. The communication method according to claim 2, wherein the MU-PPDU comprises an aggregation of first MAC protocol data units, MPDUs, and
the aggregation of first MPDUs comprises an aggregation of the sensing measurement setup termination frames and an aggregation of the trigger frames.

4. The communication method according to claim 2, wherein the MU-PPDU comprises a second MPDU, and
the second MPDU comprises the sensing measurement setup termination frames and the trigger frames respectively corresponding to the sensing measurement setup termination frames.

5. The communication method according to any one of claims 1 to 4, wherein the sensing measurement setup termination frame is a unicast message frame.

6. A communication method applied to a first sensing responder, comprising:
receiving a target radio frame, the target radio frame comprising a multi-user physical layer protocol data unit, MU-PPDU, and the MU-PPDU comprising sensing measurement setup termination message frames corresponding to at least two sensing responders; and
obtaining, in the MU-PPDU, a first sensing measurement setup termination frame corresponding to the first sensing responder.

7. The communication method according to claim 6, wherein the MU-PPDU further comprises trigger frames respectively corresponding to the sensing measurement setup termination frames,
the trigger frame indicates an uplink resource unit configured for the sensing responder, and the uplink resource unit carries an acknowledgement message of the sensing measurement setup termination frame replied by the sensing responder,
after obtaining, in the MU-PPDU, the first sensing measurement setup termination frame corresponding to the first sensing responder, the method further comprises:
sending the acknowledgement message on a first uplink resource unit corresponding to the first sensing measurement setup termination frame; and
after sending the acknowledgement message, terminating a sensing measurement process.

8. The communication method according to claim 7, wherein the MU-PPDU comprises an aggregation of first MAC protocol data units, MPDUs, and
the aggregation of first MPDUs comprises an aggregation of the sensing measurement setup termination frames and an aggregation of the trigger frames.

9. The communication method according to claim 7, wherein the MU-PPDU comprises a second MPDU, and
the second MPDU comprises the sensing measurement setup termination frames and the trigger frames respectively corresponding to the sensing measurement setup termination frames.

10. The communication method according to any one of claims 6 to 9, wherein the sensing measurement setup termination frame is a unicast message frame.

11. A network device, which is a sensing initiator, comprising:
a determining module, configured to determine a target radio frame, the target radio frame comprising a multi-user physical layer protocol data unit, MU-PPDU, and the MU-PPDU comprising sensing measurement setup termination message frames corresponding to at least two sensing responders; and
a sending module, configured to send the target radio frame to the at least two sensing responders simultaneously.

12. An electronic device, which is a first sensing responder, comprising:
a receiving module, configured to receive a target radio frame, the target radio frame comprising a multi-user physical layer protocol data unit, MU-PPDU, and the MU-PPDU comprising sensing measurement setup termination message frames corresponding to at least two sensing responders; and
an obtaining module, configured to obtain, in the MU-PPDU, a first sensing measurement setup termination frame corresponding to the first sensing responder.

13. A communication device applied to a sensing initiator, comprising:
a radio frame determining module, configured to determine a target radio frame, the target radio frame comprising a multi-user physical layer protocol data unit, MU-PPDU, and the MU-PPDU comprising sensing measurement setup termination message frames corresponding to at least two sensing responders; and
a radio frame sending module, configured to send the target radio frame to the at least two sensing responders simultaneously.

14. A communication device applied to a first sensing responder, comprising:
a radio frame receiving module, configured to receive a target radio frame, the target radio frame comprising a multi-user physical layer protocol data unit, MU-PPDU, and the MU-PPDU comprising sensing measurement setup termination message frames corresponding to at least two sensing responders; and
a termination frame obtaining module, configured to obtain, in the MU-PPDU, a first sensing measurement setup termination frame corresponding to the first sensing responder.

15. An electronic device, comprising:
a memory;
a processor; and
a computer program stored in the memory and runnable on the processor, wherein the computer program, when being executed by the processor, implements the method according to any one of claims 1 to 5 or 6 to 10.

16. A computer-readable storage medium having a computer program stored thereon, wherein the computer program, when being executed by a processor, implements the method according to any one of claims 1 to 5 or 6 to 10.
